# EUROPEAN PATENT APPLICATION

(11) **EP 1 947 048 A1**
(43) Date of publication of application: **23.07.2008**
(21) Application number: 08445002.2
(22) Date of filing: 16.01.2008
(51) Int. Cl.: B66B 11/00, B66B 7/06

(54) **Drive means for elevator**

(30) Priority: 17.01.2007 SE 0700098
(71) Applicant: Motala Hissar AB, 591 04 Motala (SE)
(72) Inventor: Sundström, Gunnar, Motala (SE)
(74) Representative: Berglund, Erik Wilhelm

(57) **Abstract**

Drive means for elevator where a cog belt (4) transfer the lifting force to the elevator cage. The cog belt (4) runs over pulleys and at least one of a motor driven pinion (44) arranged so that the ends of the drive belt from above and from below respectfully are coupled to the elevator cage so that at lifting the freed belt part length is taken up on the bottom side of the elevator cage. Drive belt and its pinion and pulleys are arranged on the inside of the shaft between the sides of the elevator cage and the inner side of the shaft, one device on each side of the elevator cage.

## Description

The present invention is concerned with a drive means for elevators in houses or ships with a moderate number of floors. For these elevators it is important that the elevator space is used efficiently so that the floor area in the elevator cage constitute an as large part as possible of the cross section area of the elevator shaft. The object of the invention is to achieve a very space efficient drive means that is also suited for installation in already existing buildings.

In accordance with the invention this object is solved by one or several, in particular two, cog belts that run over pulleys and at least one motor driven pinion, being arranged so that the ends of the drive belt both from above and from below are coupled to the elevator cage so that at lifting the freed length of the lifting belt part is taken up on the bottom side of the elevator. Drive belts and their pulleys and pinions are arranged on the inside of the shaft between the sides of the elevator cage and the inside of the shaft, the rotational axles of pulleys and pinions are perpendicular to the side walls of the shaft. The drive means of the elevator also lacks counter weight.

Since the elevators in question are moderately large it is sufficient with surprisingly narrow belts, in particular if there is one on each side of the elevator cage.

In a first version the ends of the belts are fastened to the elevator cage, or to guiding means fastened in this and running over pulleys in roof and floor in the elevator shaft. In a second version the belts may be arranged running over pulleys on the elevator cage and further back to roof and floor in the elevator shaft so that the lifting capacity is doubled for the same cog belt.

The use of cog belts does not only enable the use of a very narrow space between elevator cage and shaft but also result in a low weight. This may initially seem less important at houses than at ships, but the low weight also facilitates mounting and demounting and reduces the risks at this.

Since the belt is fastened in both ends and in this way may be pretensioned it will despite the absence of counter weights be controlled in its entire length and sways or shocks never occur in the belt. Although the length of the belt at the invention is the double compared to the length of the part of the belt that is used for the lifting the belt is instead completely controlled.

Since the guides for the elevator cages require a space in the same size as the width of the cog belts one can say that belts and wheels does not take any space at all, or that they at least do not reduce the dimensions of the elevator cage additionally, in the worst case the influence will be marginal.

Since the cog belt consist of material with its own inner damping a damping occur in the cog belt itself so that a soft and silent drive is achieved, which is also furthered by the weight of the cog belt being small in relation of the weight of the elevator cage.

In an advantageous further development of the invention the cogs of the cog belts are at least to some part angled in relation to the cross direction of the belt so that belts and pinions are centered relative each other without need of sides or flanges. This reduce the demand for width of space for accommodation of the cog belt alternatively a wider and therefor more powerful cog belt can be used. Furthermore the wear on the sides of the belt is reduced, as the corresponding loss of power due to friction.

By arranging the cogs and or parts of these with an overlap lengthwise of the belt an absolutely even rolling up and off is obtained without diameter changes so that the transfer of driving force between pinion and cog belt becomes soundless and vibration free, which improves the comfort in the elevator as well as for those present around the elevator shaft.

The shapes of the cogs on belt and pinion together with the path of the belt provides an entirely continuous and exact guiding of the cog belt, in all directions, which guaranties a silent, vibration free and efficient drive of the elevator cage and this also in a minimum of space. By the overlap of the cogs lengthwise of the belt and in a circumferential direction of the pinions the belt will at the running over the pinions or cylindrical pulleys follow an entirely part circular path.

As a comparison can be mentioned that chains or belts with straight cogs however have a variation in the transfer and in the path since the bending of the belt is not circular but rather like a polygon. This result in small jerks or vibrations that in themselves or by means of higher harmonics also can create disturbing noise.

The silent and vibration free drive also enables a fast driving of the elevator cage.

For pulleys in contact with the rear side of the belt side flanges may be arranged or the belt may be provided with a row of cogs on the rear side for the centering. Since mostly only one such pulley will be needed, that furthermore can be located high up it will probably not be difficult to accommodate this pulley even if it has flanges. As a further alternative one can arrange a pulley that is in contact with the outward facing cog provided side of the cog belt where this runs over a plain pulley.

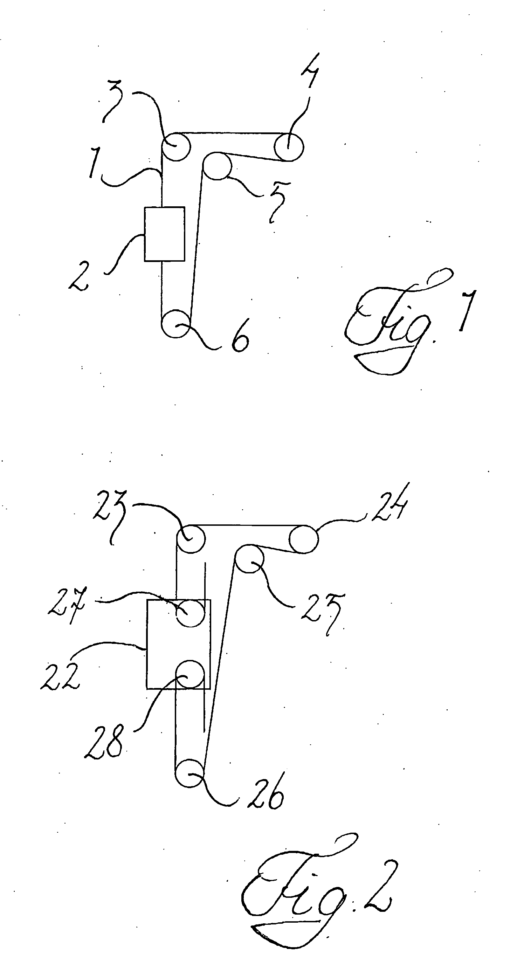

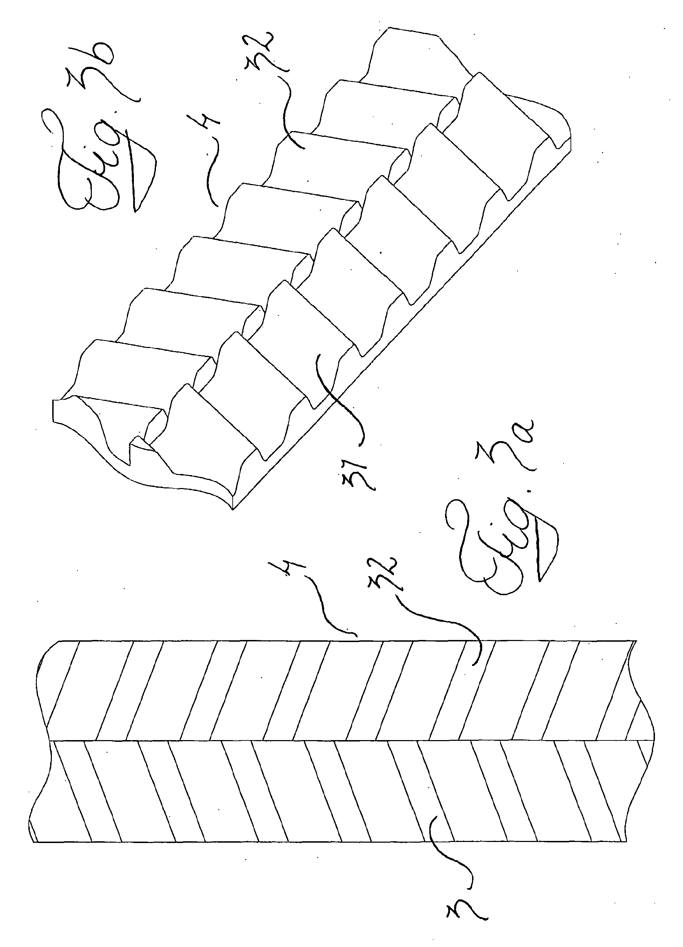

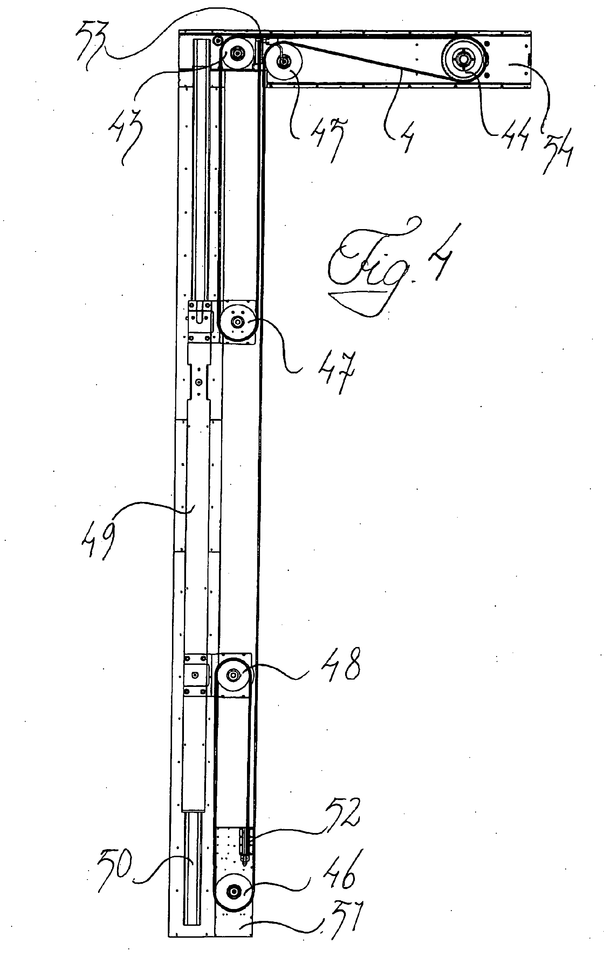

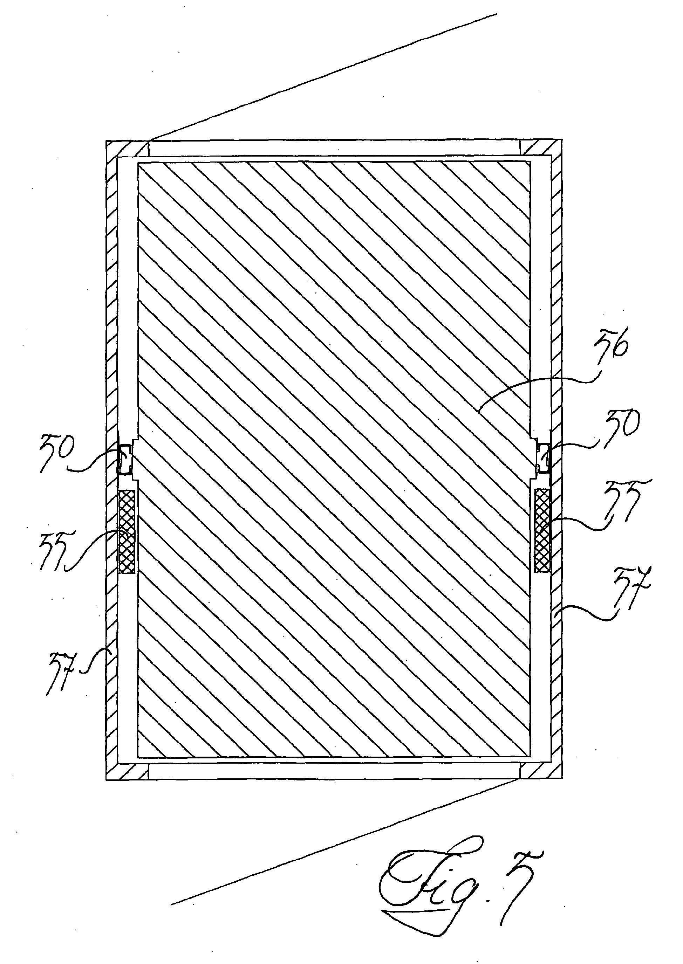

Further characteristics of the invention and advantageous further developments of this are apparent from the claims as well as from the following described embodiments with reference to the enclosed drawings. In the drawings fig 1 shows schematically a first belt drive according to the invention, fig 2 a second embodiment according to the invention, figures 3a and 3b an example of a drive belt of the type that is used at the invention, fig 4 a more detailed picture of an elevator device according to the principle shown in fig 2 and fig 5 shows schematically how little space the drive means according to the invention require in the shaft between this and the elevator cage.

In figures 1 and 2 two different configurations of belt drives are shown. The belts are arranged in the two narrow spaces between the doorless opposite sides of the elevator cage and corresponding sides of the elevator shaft. In these narrow spaces at the center of the elevator side, seen depth-wise in from the door, vertical guides are arranged for the elevator cage (fig 5). The drive mechanism is arranged in the shape of two belt drives on either side of the elevator in front of the guides towards the door side and the drive motor is arranged at the roof in front of the elevator shaft for easy access.

In fig 1 is shown how a cog belt 1 is fastened to the elevator cage 2 close to the vertical guide and extending upwards from the fastening point in the elevator cage and running over an upper pulley 3 and horizontally further out from the elevator shaft to a cog provided drive wheel 4 that is in a driving connection with an electric motor. From the drive wheel the belt 1 runs back into the shaft and over a pulley 5 and further down towards a further pulley 6 arranged in the lower end of the shaft, from which the belt extends up to the elevator cage and is fastened in this in the proximity of the guides. The belt extends from its two fastenings upwards and downwards respectively along the same vertical line.

The cog provided drive wheel 4 is the only one that has to have cogs for the transfer of forces from the motor to the belt. Also the pulleys are provided with cogs, but for the pulley that turns the path of the belt from the motor and down towards the lower end of the shaft and therefor is in contact with the flat rear side of the belt. This pulley has either lateral flanges or includes a centering track, in which cogs on the back of the belt can grip in order to achieve a centering and eliminate lateral flanges to keep the belt in place laterally.

In fig 2 an alternative for the path of the belt is shown. Starting from the path of the belt in fig 1 two pulleys 27, 28 are arranged on sides of the elevator cage 22. Instead of being fastened in the elevator cage the two ends of the cog belt turns over these pulleys and back to the top and bottom respectively of the shaft, where they are fastened. In this way a gearing is achieved so that the lifting power is doubled in relation to the force in the belt while the belt length is increased approximately corresponding to the height of the shaft.

The cog belt 4 shown in fig 3 has cogs 31, 32 that are arranged in two rows with the same width and in the length direction of the belts. The cogs are arranged obliquely, angled (v) to the cross direction of the belt , the two rows of cogs having these angles facing in different directions, but with the same angle (v) relative the cross direction of the belt. Further the two cog rows are displaced relative each other with a half pitch. The displacement and angle of the cogs make these overlap each other in the length direction and a very even, vibration free and silent turning movement is obtained when the belt pass pinions and pulleys.

Since the belt with its ends acts on the elevator cage from above as well as from below in addition to an efficient handling of the nonworking part of the cog belt it is possible to pretension the entire belt, giving a continuous and vibration free control of the belt that also contribute to a very low sound level.

Since the belt is comparatively long at the invention it will in its length direction be somewhat resilient, which reduce the risk for overloading of the belt. If so required also a spring bracket can be arranged, in particular for the lower belt end that is not directly affected by the lifting forces.

In fig 4 is finally shown how one half of a drive system in accordance with fig 2 may look in situ in an elevator shaft, apart from the shaft being shown considerably shortened. The cog belt is numbered 41, the drive wheel with 44 and the pulleys with 43, 45, 46, 47, 48. The elevator cage is not shown, but instead a rail 49 that support the not shown elevator cage and the parts of the drive system that would otherwise have been mounted on the cage. The shown installation require very little space and only a few millimeters of the width of the shaft is required in addition to the width of the cog belt. It is in other words possible to accommodate the drive in the spaces that are anyhow required for the elevator cage guides as is shown in fig 5.

In the lower end of the shaft or in the proximity of the lower end of the shaft on the side of this next to a vertical guide 50 arranged in the middle of the shaft side a lower fixed unit 51 is fastened. This fixed unit includes a bracket 52 for the lower end of the belt 4 and a lower pulley 46 with its bearing. From the bracket 52 for the end of the belt 4 this runs up over a pulley, the bearing of which is fastened to the rail 49 at a height level that allows the elevator cage to come as far down as is permitted by other circumstances without these two pulleys 46, 48 coming in contact with each other.

In the upper end of the shaft the belt 4 runs down from a bracket 53 in an upper fixed unit 54 down and below a pulley 47 journaled in the upper end of the rail 49 but sufficiently far down to prevent the pulleys 45, 47 from coming in contact with each other when the elevator reaches it uppermost position. From the pulley 47 the belt runs further up towards the uppermost pulley 45 from which the belt extends out to the motor-driven pinion 44, around this and over a pulley 45 down to the lowermost fixed pulley 46. In the upper fixed unit 54 also the pulley 45 and the driving pinion 44, as well as un upper bracket or connection with the upper end of the guide 50 are.

The drive motor of the elevator is via a gearbox coupled to the belt driving pinion 44, which as the motor is located in front of and above the elevator door in the top floor. The pinion 44 is arranged on an axle that extends crosswise over to the other side of the elevator where a corresponding belt device is arranged.

Instead of locating the drive motor high up, as shown, it may be located as far down as possible or somewhere else where appropriate. The location on top however has the advantage that the part of the belt that lifts the elevator cage will be the shortest one. This in turn result in a minimal extending of the belt between the elevator cage and the motor. Also the motor will be easily accessible for service etc.

The first hand choice is the alternative with two belts, one on each side of the elevator cage, but one can also consider to use two further belt drives on the rear side of the guide rails. The driving pinions may for two parallel cog belt drives be connected with each other, for instance via a crosswise arranged axle or be driven synchronously by synchronously working motors. If the guides do not have to extend to the roof of the elevator shaft the parallel connection of further belt drives may be achieved with belts.

From fig 5 it is apparent how space efficient the drive in accordance with the invention is. The space used by the drives at the sides of the elevator is referenced 55 and the elevator cage with 56 and the shaft with 57.

The elevator drives shown in figures 2 and 4 in accordance with the invention require a long belt, which might be considered as prize increasing. However only the half of the belt working in the upper end of the elevator cage carry the weight of elevator cage and load, the lower part of the belt is only subjected to the pretension force minus the weight of elevator cage and load.

Since the cog belt do not have to be serviced or lubricated, the drive device accordng to the invention will be service-free to a large extent and the only oil or grease that is needed is in the bearings of the pulleys. This also makes the drive device very clean.

The shape of the cogs on belt and pinion together with the path of the belt provide an entirely continuous and exact control of the cog belt, in all directions securing a silent, vibration free and efficient drive of the elevator cage and this also in a minimum of space. Since this space anyhow is required for the guides of the elevator cage one could say that belts and pulleys do not take any place at all, or at least do not restrict the dimensions of the elevator cage any further.

One can also at suitable dimensions for the elevator cage consider to locate the drive behind the guides of the elevator cage seen from the elevator door and instead use the space in front of the guides for flexible doors when these are opened.

The fastening of the belt to cage or shaft can be achieved with an elongate piece of iron with a shape completing that of the cogs of the belt and placed so the cogs grip in between the cogs of the belt. Belt end and iron peace are then inserted into a channel with a cross section corresponding to that of iron piece and belt together when in grip and the iron piece is provided with means that prevent the iron piece from moving out from the channel. If adjustability is desired for the achieving of pretension and relative adjustment of parallel cog belts respectively, the iron piece is provided with a threaded bolt in the end that extends out through an end wall in the receiving space so that tensioning may take place with a nut and suitable locking means. At the same time the channel may be entirely open in the other end for a simple mounting and demounting of the cog belt.

The invention provides a space saving silent and reliable elevator drive that can handle high speeds and a low sound level.

At the mounting of the elevator advantageously the elevator drive is placed in the shaft before the elevator cage is pushed into the shaft and fastened to the rails. In this way the mounting of the different parts of the drive means is clear and the used components have a moderate weight providing a simple and safe mounting with good accessibility despite the small space taken by the drive means.

If you want an elevator with a window only the drive belt and the rail have to be visible if one want a continuous window.

## Claims

1. Drive means for elevator, **characterized in that** one or several cog belts transfer the lifting force to the elevator cage, which cog belt runs over pulleys and at least one by a motor driven pinion arranged so that the ends of the drive belt from above and from below respectively are coupled to the elevator cage so that at lifting the freed part of the lifting part of the belt is taken up on the bottom side of the elevator, and that drive belts and their pinions and pulleys are arranged on the inside of the shaft between the sides of the elevator cage and the inside of the shaft, and that the pulleys over which the belt run are perpendicular to the space between the wall of the shaft and the elevator cage, and that the weight of the elevator is not balanced by any counterweight.

2. Drive means according to claim 1, **characterized in that** the ends of the cog belt are fastened to the cage, one extending upwards and the other one extending downwards

3. Drive means according to preceding claims, **characterized in** the ends of the cog belt being fastened in the shaft and running over pulleys arranged on the elevator cage.

4. Drive means according to any of the preceding claims, **characterized in that** the lifting end of the belt act on the elevator cage close to a vertical center line.

5. Drive means according to any of the preceding claims, **characterized in** the drive motor being arranged in front of the elevator shaft, in particular directly below the roof and that the belt or belts via pulleys are drawn out to the motor or an axle driven by this and is led around a driving pinion.

6. Drive means according to any of the preceding claims, **characterized in** the drive being executed by means of one or more cog belts, the cogs of which being at least to some part angled relative the cross direction of the belt and with such a length for the angled parts that cog belt and pinion are centered relative each other so that the latter do not need flanges.

7. Drive means according to claim 6, **characterized in that** the pulleys are provided with cogs so that edge flanges are not needed for these.

8. Drive means according to any of the preceding claims **characterized in** the belt on its back side being provided with protrusions or cogs for gripping into pulleys bending in the back direction so that these do not need any edge flanges.

9. Drive means according to claim 6, **characterized in that** it includes two symmetrically arranged cog belts.

10. Drive means according to any of the preceding claims **characterized in that** the parts that move with the elevator are arranged on a rail that is journaled moveable on a vertical guide arranged on the inside of the shaft and that the elevator cage is demountable fastened to the rail, allowing mounting of the elevator cage after mounting of the drive means.
